Europäisches Patentamt

**European Patent Office**

Office européen des brevets

(11) Numéro de publication: **0 015 243**
**B1**

# (12) FASCICULE DE BREVET EUROPEEN

(45) Date de publication du fascicule du brevet:
14.07.82

(51) Int. Cl.³: **F 16 C 31/06**

(21) Numéro de dépôt: **80810063.0**

(22) Date de dépôt: **21.02.80**

(54) **Elément de guidage à billes axial-rotatif.**

(30) Priorité: **26.02.79 CH 1853/79**

(43) Date de publication de la demande:
**03.09.80 Bulletin 80/18**

(45) Mention de la délivrance du brevet:
**14.07.82 Bulletin 82/28**

(84) Etats contractants désignés:
**AT BE DE FR GB IT NL SE**

(56) Documents cités:
**CH-A-596 466**
**CH-A-606 848**
**CH-A-606 850**
**FR-A-1 235 152**
**FR-A-1 582 155**
**FR-A-2 039 647**
**FR-A-2 247 636**
**FR-A-2 260 022**
**FR-A-2 296 123**
**FR-A-2 357 775**
**GB-A-896 251**
**US-A-2 576 269**

(73) Titulaire: **SRO Kugellagerwerke J. Schmid-Roost AG,
Oerlikonerstrasse 7, CH-8050 Zurich (CH)**

(72) Inventeur: **Borel, Denis, Rietacker 7, CH-9548 Matzingen
(CH)**

(74) Mandataire: **Dietlin, Henri et al, DIETLIN, MOHNHAUPT
& Cie 3, quai du Mont-Blanc, CH-1201 Genève (CH)**

BUNDESDRUCKEREI BERLIN

# Elément de guidage a billes axial-rotatif

La présente invention a pour objet un élément de guidage de précision pour déplacement linéaire illimité accompagné ou non d'une rotation sur un arbre.

On connaît différents systèmes de guidage axial-rotatif par contact à bille sur un arbre.

1) Le principe à deux roulements qui consiste en une combinaison d'un roulement à aiguilles monté à l'extérieur d'un roulement axial à circulation de billes. Ce système est encombrant et manque de précision.

2) Le principe dit à cage libre, où des billes sont placées dans une cage mobile entre l'arbre et un manchon cylindrique. Ce système ne permet pas un déplacement linéaire important.

3) Enfin, le principe à alternance de contact de rectilignes de billes de circuits de circulation situés dans une cage libre en rotation sur des secteurs de travail dans le manchon extérieur, l'élément selon l'invention se rapporte à ce système et consiste en une nette amélioration de ce principe.

Le guidage linéaire illimité et rotatif à alternance de contact mentionné ci-dessus dans le point 3, permet un guidage precis. Toutefois, ses principaux défauts sont, une capacité de charge insuffisante et un trop grand nombre de circuits de billes entraînant également un prix de revient relativement élevé. Ces défauts sont directement liés au principe même du roulement, en effet, dans les principes connus, la disposition angulaire réciproque des rectilignes des circuits de circulation de billes et respectivement des secteurs de travail et de dégagement répondent à une loi géométrique permettant une rotation dans une première solution par un nombre différent des circuits par rapport aux secteurs, dans une deuxième solution, par des angles bâtards des circuits disposés dans le cage d'une façon irrégulière. La première est décrite dans le FR-A 2 357 775 (Geffner) qui présente un roulement dans lequel le nombre de chemins de circulation de billes est différent du nombre de secteurs de travail ou de dégagement, la répartition des secteurs de travail et de dégagement ainsi que la repartition des circuits de billes étant régulière. Il n'y a donc dans le roulement proposé par Geffner pas de groupement par paire de chemins de circulation de billes. Le roulement offre le désavantage de présenter dans certaines positions relatives de la cage et du manchon un angle $\lambda$ de décrochage ou autre contenant quatre rectilignes successifs non chargés.

Le brevet FR-A 1 235 152 (Schutz) représente un exemple de la deuxième solution avec des angles bâtards et est rédigé d'une façon beaucoup trop sommaire pour permettre à l'homme du métier d'en tirer un enseignement.

Schutz propose un roulement avec 9 circuits de circulation de billes. Cet élément avec 9 circuits, donc un nombre impair de circuits, semble être réalisé d'après le dessin, pour former des groupes de 3 circuits. Après un essai de calculs, la titulaire a constaté que l'exemple avec 9 circuits par groupe de 3 représente une solution valable particulière. Par contre, avec ce principe, un élément formé avec 6 circuits, ne fonctionnerait pas, pas plus qu'un élément de 8 et 10 circuits. Dans cet exemple avec 9 circuits de circulation de billes, l'élément Schutz présente également un angle au centre de décrochage $\lambda$ contenant 5 rectilignes successifs non chargés. Ces deux solutions comportent un même défaut commun, lors d'une alternance d'un circuit de billes sur les secteurs de travail, les deux rectilignes de billes de ce circuit étant momentanément inutilisables, les rectilignes les plus proches servant d'appuis de travail forment entre eux un angle au centre $\lambda$ important entraînant de ce fait une trop grande diminution de la capacité de charge de l'élément. De défaut est grave, car cette faible capacité de charge n'étant que momentannée, il s'ensuit une importante variation de la portance de l'élément entraînant des vibrations et un changement de la position radiale de guidage par un deséquilibre angulaire général des appuis de travail des rectilignes de billes dans le manchon. D'autre part, la solution utilisant des angles bâtards pèche par les mêmes défauts et en plus a l'enconvénient de perdre de la place interne et de ce fait de n'être pas fabriquable dans de petites dimensions.

Le but de la présente invention est de pallier à ces inconvénients et en conséquence de proposer un élément de guidage axial illimité et rotatif à alternance de contact pouvant remplacer les dispositifs existants tout en éliminant les défauts précités, c'est-à-dire d'obtenir:

— une bonne capacité de charge
— une symétrie générale dans les tensions de travail
— une réalisation possible dans de petites dimensions
— une grande précision de guidage
— un prix de revient intéressant.

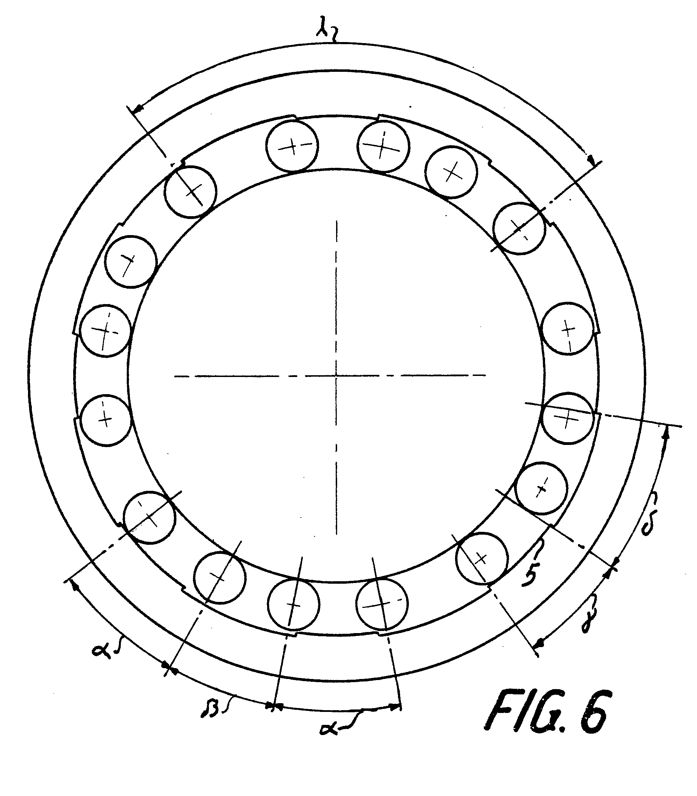

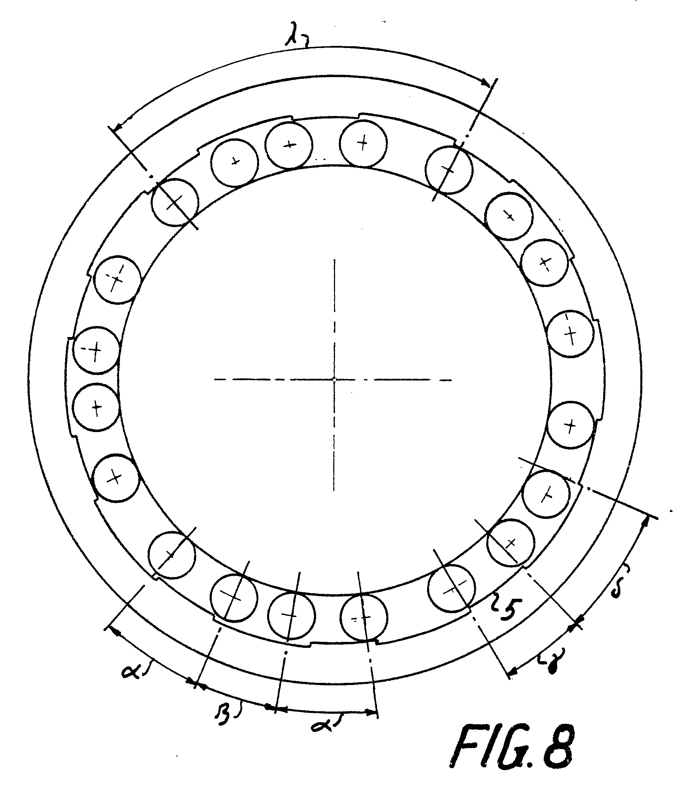

L'élément de guidage selon l'invention comprenant un manchon extérieur, positionnnant axialement une cage tubulaire intérieure libre en rotation comportant des circuits fermés de circulation de billes formés de deux rectilignes longitudinaux crevant la cage et reliés entre eux à leur extrémité par des parties courbes, le manchon présentant dans son alésage des secteurs de travail assurant le contact des billes avec l'arbre et des secteurs de dégagement permettant en alternance la circulation de retour de ces billes, la valeur angulaire des secteurs de travail étant plus petite que l'angle au centre défini par deux rectilignes d'un même circuit de billes, et la valeur angulaire d'un secteur de dégagement étant plus grande que l'angle au centre défini par les deux rectilignes du circuit, est caractérisé en ce que la cage à billes est pourvue d'un nombre P de paires de circuits fermés de circulation de billes, le nombre de circuits étant de six, huit ou dix, les circuits étant groupés par paires, l'angle au centre $\beta$ séparant les deux rectilignes adjacents des deux circuits de la même paire étant égal ou plus petit que l'angle au centre $\gamma$ d'un secteur de travail du manchon, les paires de circuits étant réparties selon une division angulaire régulière sur le pourtour de la cage, le nombre de circuits de circulation de billes étant égale au nombre de secteurs de travail ou de dégagement du manchon présentant également une répartition angulaire régulière et l'angle au centre $\alpha$ défini par les deux rectilignes d'un même circuit étant sensiblement égal à $\frac{360°}{4P}$ de telle façon qu'il n'y a dans la position d'alternance la plus défavorable que trois rectilignes successifs de billes non chargés entre les deux rectilignes chargés les plus proches définissant un angle au centre de décrochage $\lambda$ (Fig. 6 et 8), cet angle $\lambda$ étant de

$$2 \frac{360°}{\text{nombre de circuits de billes}} .$$

L'élément selon l'invention comporte une nouvelle disposition géométrique interne des secteurs et des circuits de billes qui permet lors d'une alternance de diminuer l'angle $\lambda$ d'une façon appréciable. A nombre de circuits identiques aux systèmes existants, l'élément selon l'invention a un angle $\lambda$ tel que le gain obtenu confère à l'élément environ deux fois la capacité de charge par rapport aux systèmes connus et disponibles sur le marché, en outre l'élément reste toujours équilibré symétriquement au niveau des tensions de charge et garde de ce fait une position de guidage concentrique.

A l'inverse, à capacité de charge identique, l'élément selon l'invention comporte deux à trois circuits de circulation de billes en moins par rapport à un élément de l'art antérieur, ce qui entraîne une économie sur le prix des billes et sur l'usinage de la cage. En outre, dans ce cas, le nombre de circuits de billes étant plus petit, les billes peuvent être sensiblement plus grosses, ce qui diminue leur nombre tout en améliorant la capacité de charge et dans ce cas, la cage à billes gagne en masse et en rigidité ce qui permet de fabriquer cette dernière en matière plastique moulée autolubrifiante tel que polyamide graphité, ce qui de ce fait apporte à l'élément un fonctionnement doux et silencieux et permet un prix de revient de la cage d'environ 80% meilleur marché qu'une cage métallique usinée.

Les dessins représentent, à titre d'exemple, un élément de guidage axial et rotatif selon l'invention dans différentes formes d'exécution, ainsi que des exemples de comparaison situant l'élément relativement à l'état actuel de la technique.

Dans les dessins:

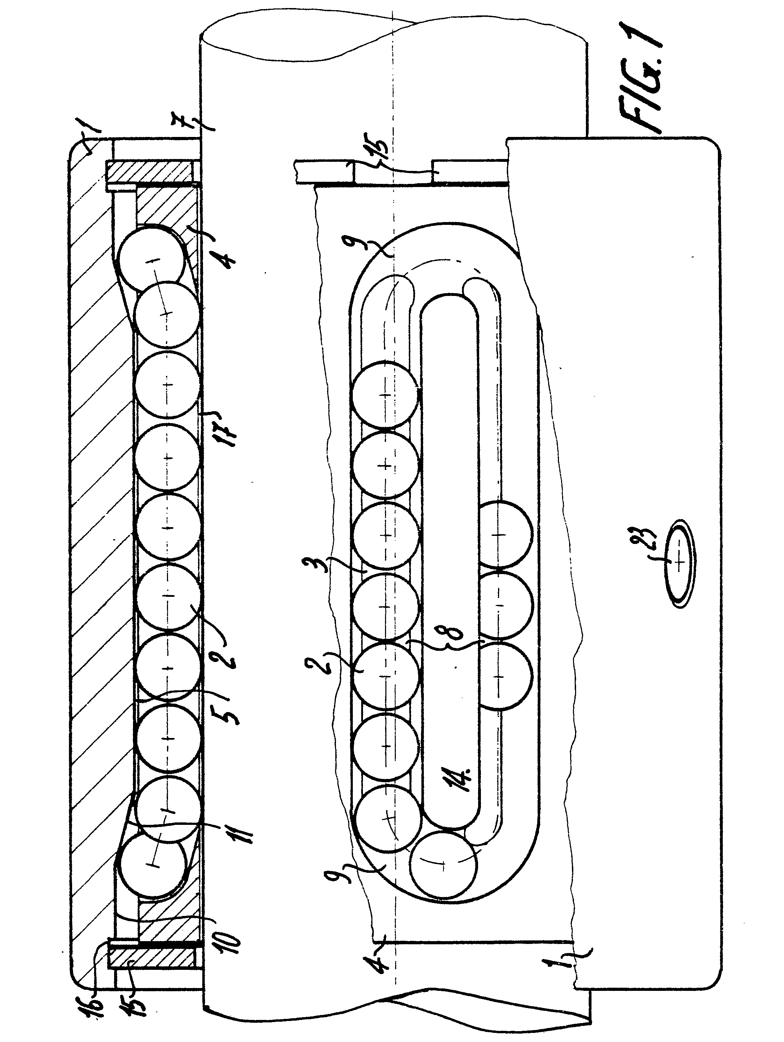

La fig. 1 représente une vue de côté, partiellement en coupe, d'un élément selon l'invention,

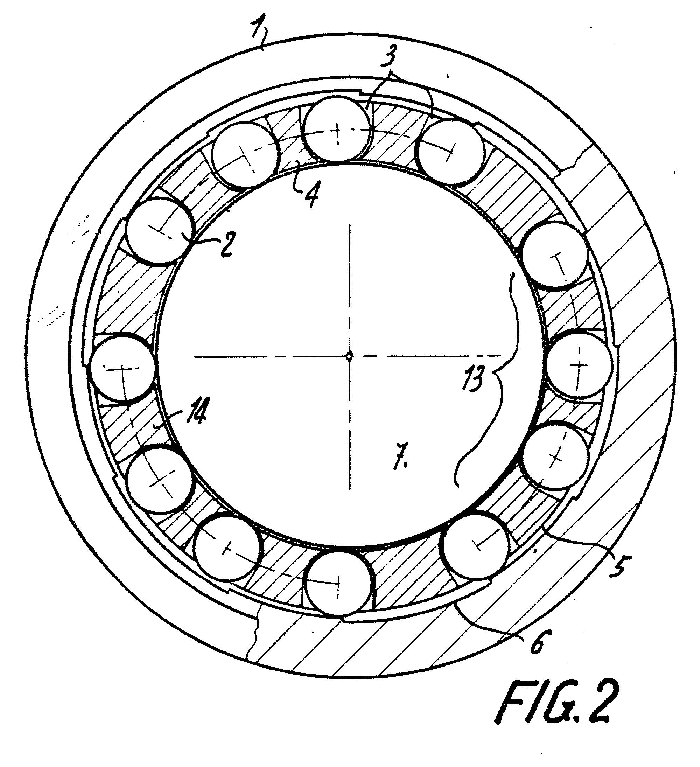

la fig. 2 représente une coupe radiale de l'élément de la fig. 1 dans une exécution à trois paires (13) de circuits de billes,

les fig. 3 et 4 représentent un exemple relatif de la valeur de l'angle de décrochage $\lambda$ dans une exécution à six circuits de billes, la fig. 3 étant l'état actuel de la technique, la fig. 4, un élément selon l'invention,

les fig. 5 et 6 représentent un exemple relatif de la valeur de l'angle de décrochage $\lambda$ dans une exécution à huit circuits de billes, la fig. 5 étant l'état actuel de la technique. La fig. 6 un élément selon l'invention,

les fig. 7 et 8 représentent un exemple relatif de la valeur de l'angle de décrochage $\lambda$ dans une exécution à dix circuits de billes, la fig. 7 étant l'état actuel de la technique, la fig. 8 un élément selon l'invention,

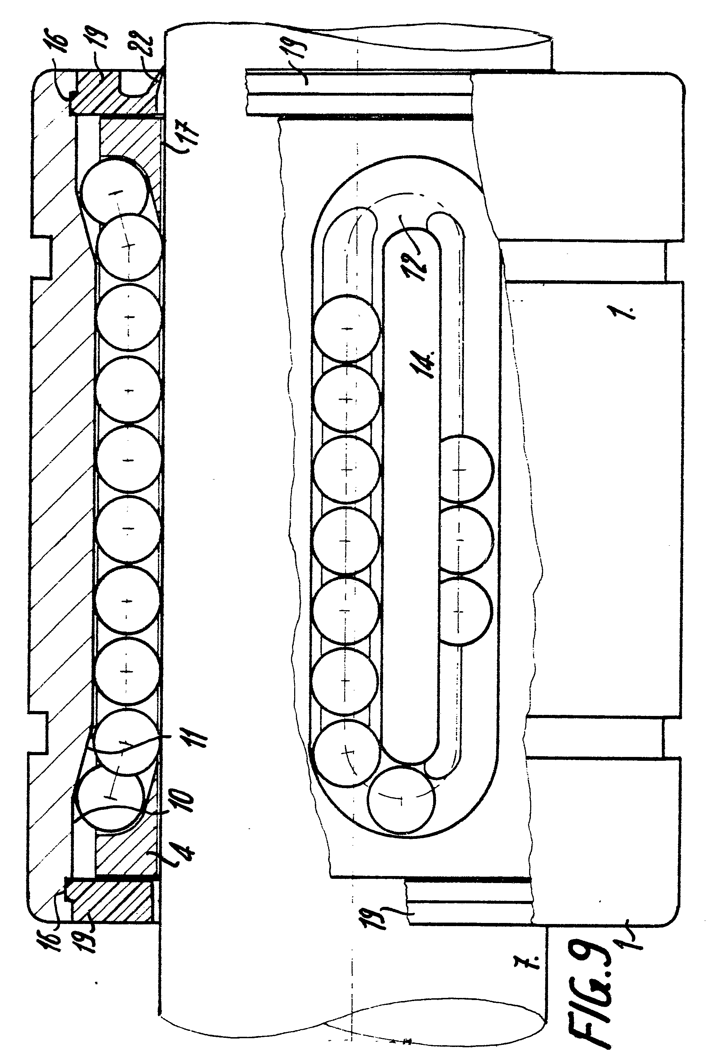

la fig. 9 représente une vue de côté partiellement en coupe d'un élément selon l'invention muni de butées à friction d'extrémités en matière plastique semi déformable, une de ces pièces étant à la fois butée et joint d'étanchéité,

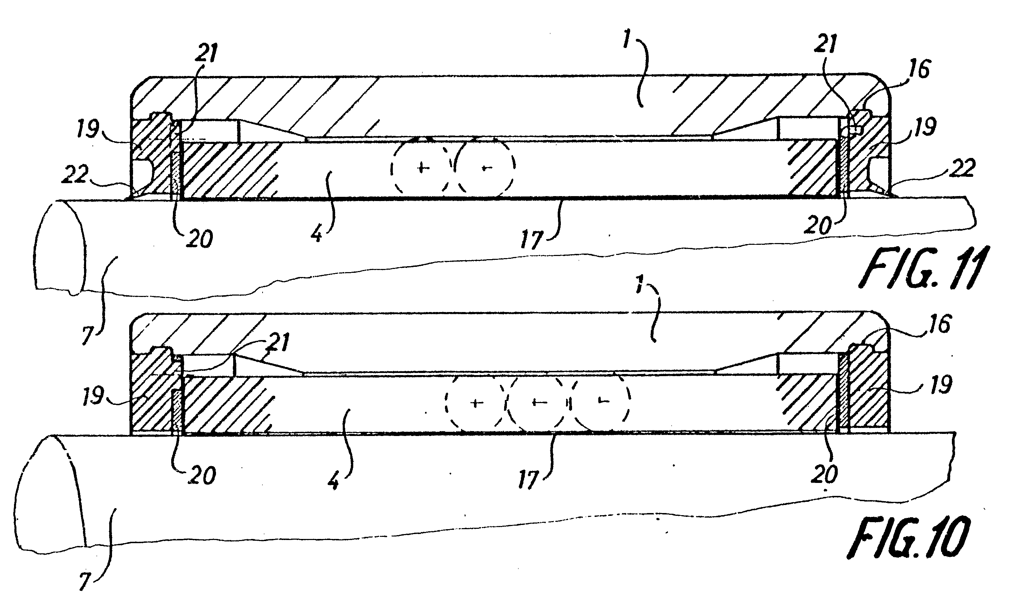

la fig. 10 représente une coupe d'un élément avec des butées comportant une rondelle métallique intercalée entre la cage et la partie circulaire en matière semi-déformable,

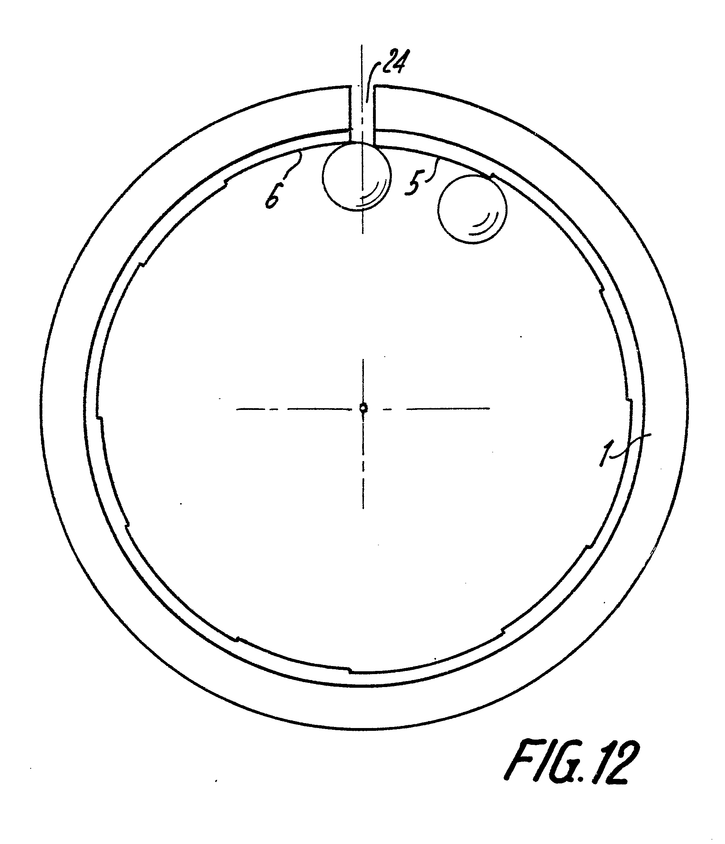

la fig. 11 représente une variante de la fig. 10, la partie circulaire en matière souple comportant une lèvre d'étanchéité,

la fig. 12 représente une vue frontale du manchon d'un élément selon l'invention muni d'une fente outre longitudinale (24) située au bord d'un secteur de dégagement,

la fig. 13 représente une vue de côté, partiellement en coupe d'un élément selon l'invention muni de plusieurs bagues circulaires en matière déformable (25) positionnées dans des rainures (26),

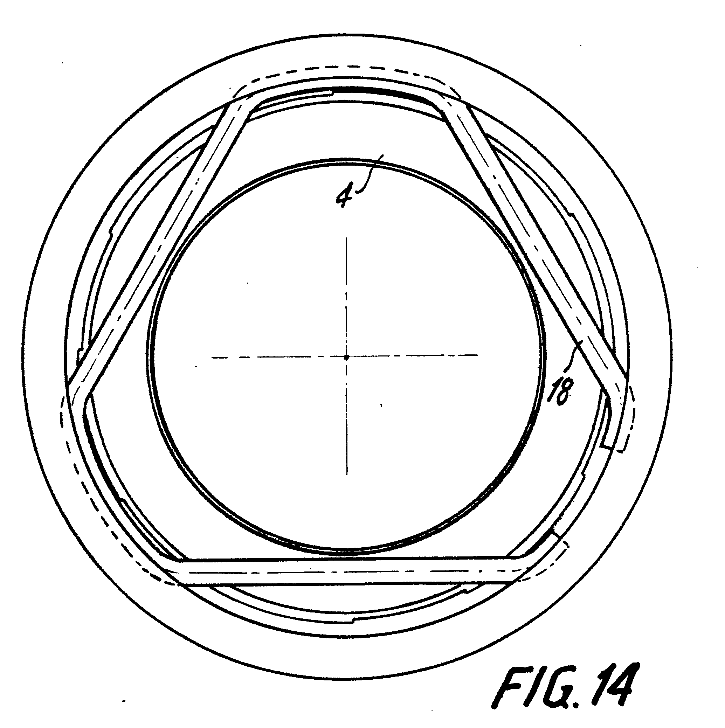

la fig. 14 représente une vue frontale d'un élément selon l'invention muni de butées d'extrémité formées par un fil d'acier à ressort (18),

les fig. 15, 16 et 17 représentent des positions angulaires particulières des billes en contact dans l'exécution d'un élément selon l'invention avec un angle au centre $\beta$ maximum soit:

$$\frac{360°}{4P} - 1 \, \varepsilon,$$

les rectilignes des circuits étant inclinés relativement aux secteurs de travail d'un angle $\varphi$, créant de ce fait un angle au centre $\lambda'$,

la fig 18 représente le gain obtenu avec l'angle

au centre $\lambda'$ relativement à l'angle au centre $\lambda$ dans une exécution de l'élément avec les secteurs et les rectilignes des circuits inclinés sur l'axe de de l'élément.

L'élément de guidage axial illimité et rotatif sur un arbre représenté dans les dessins comprend un manchon extérieur 1, des billes 2 étant disposées dans des circuits fermés 3 de circulation pratiqués dans une cage tubulaire intérieure 4, le manchon 1 présentant dans son alésage des secteurs de travail 5 assurant le contact des billes 2 entre l'arbre 7 et le manchon 1 et des secteurs de dégagement 6 de faible profondeur permettant en alternance le retour des billes 2 dans les circuits 3. Les circuits 3 sont formés de deux rectilignes longitudinaux 8 crevant la paroi de la cage. Ils sont parallèles entre eux et reliés à leur extrémité par des parties courbes 9, ces parties courbes se trouvent en regard de dégagements circulaires 10 pratiqués dans le manchon qui permettent le passage des billes 2 dans les parties courbes 9. Ces dégagements 10 sont de préférence en forme de tronc de cône 11 pour permettre une montée et une descente régulière des billes qui s'éloignent radialement de l'arbre à cet endroit, de manière à permettre l'existence de section 12 à la cage pour maintenir la partie centrale 14 des circuits 3. Ces sections 12 devant se trouver à au moins une extrémité des circuits 3.

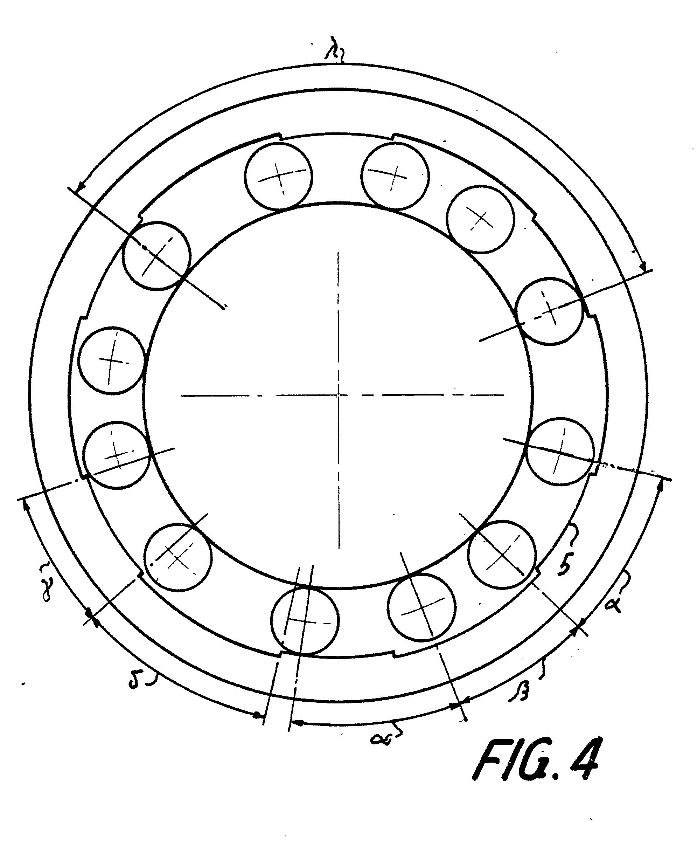

La cage à billes 4 libre en rotation est arrêtée longitudinalement relativement au manchon 1 par des butées à friction 15 positionnées dans une rainure circulaire 16 aux extrémités du manchon. Dans une solution différente, la cage 4 peut être maintenue par des butées à billes non représentées. Radialement, la cage 4 est positionnée par son alésage intérieur 17 sur l'arbre 7, l'alésage 17 de la cage étant légèrement plus grand que l'arbre 7. Pour que les billes des deux rectilignes 8 ne puissent pas être en contact ensemble entre l'arbre 7 et le manchon 1, l'angle au centre $\gamma$ (voir en particulier fig. 4, 6 et 8) défini par un secteur de travail 5 est plus petit que l'angle au centre $\alpha$ défini par les deux rectilignes d'un circuit 3, l'angle au centre $\delta$ défini par un secteur de dégagement 6 étant quant à lui plus grand que l'angle $\alpha$ d'un circuit.

L'élément de guidage selon l'invention comporte une disposition géométrique interne nouvelle qui consiste en une position angulaire particulière des rectilignes longitudinaux 8 des circuits fermés 3 de circulation de billes 2 relativement à l'ensemble des angles au centre formés par les secteurs de travail 5 et de dégagement 6 dans l'alésage du manchon 1. L'élément possède une cage à billes 4 garnie d'un nombre pair de circuits fermés 3 disposés par groupe de ceux, ces paires 13 de circuits étant réparties angulairement équidistantes et régulièrement sur le pourtour de la cage, le nombre P de ces paires 13 étant la moitié du nombre H de secteurs de travail 5 ou de dégagement 6 réparties eux aussi régulièrement dans l'alésage du manchon, l'angle au centre $\alpha$ défini par les deux rectilignes 8 d'un même cirduit étant sensiblement de

$$\frac{360}{2\,H} = \frac{360}{4\,P},$$

l'angle au centre $\beta$ défini par les deux rectilignes 8 proches l'un de l'autre de chaque circuit distinct 3 d'une paire 13 étant plus petit et au plus égal à l'angle au centre $\gamma$ défini par un secteur de travail 5 du manchon 1.

On peut donc écrire $\beta \leq \gamma < \alpha < \delta$ dans une exécution préférée, l'angle $\gamma$ défini par un secteur de travail est de

$$\frac{360}{4\,P} - \varepsilon,$$

$\varepsilon$ étant un jeu angulaire de

$$\frac{360°}{4\,P\,(H+1)} \leq \varepsilon \leq \frac{360°}{(H+1)^2}$$

la valeur de l'angle au centre $\beta$ séparant les deux rectilignes proches dans une paire de circuits étant d'une valeur de

$$\frac{360°}{4\,P} - 2\,\varepsilon.$$

La disposition angulaire des secteurs de travail et de dégagement du manchon étant régulière, il s'ensuit que $\gamma + \delta = 2\alpha$.

De par la disposition angulaire régulière des paires 13 de circuits de billes, de par la disposition également régulière des secteurs de travail 5 et de dégagement 6 et de par les valeurs angulaires décrites, il s'ensuit un positionnement réciproque identique pour chaque position polaire de $\frac{360°}{P}$ cette caractéristique confère à l'élément une symétrie générale de fonctionnement et de charge. De plus l'angle au centre $\lambda$ est défini dans l'élément par:

$$\lambda = 2\,\alpha + 2\,\beta + 2\,\varepsilon = 4\,\alpha = \frac{360°}{P},$$

comparativement en exemples les systèmes connus à alternance de contact par nombre différents donnet un angle $\lambda$ défini environ par:

$$\frac{360°}{2,3} = 156°$$

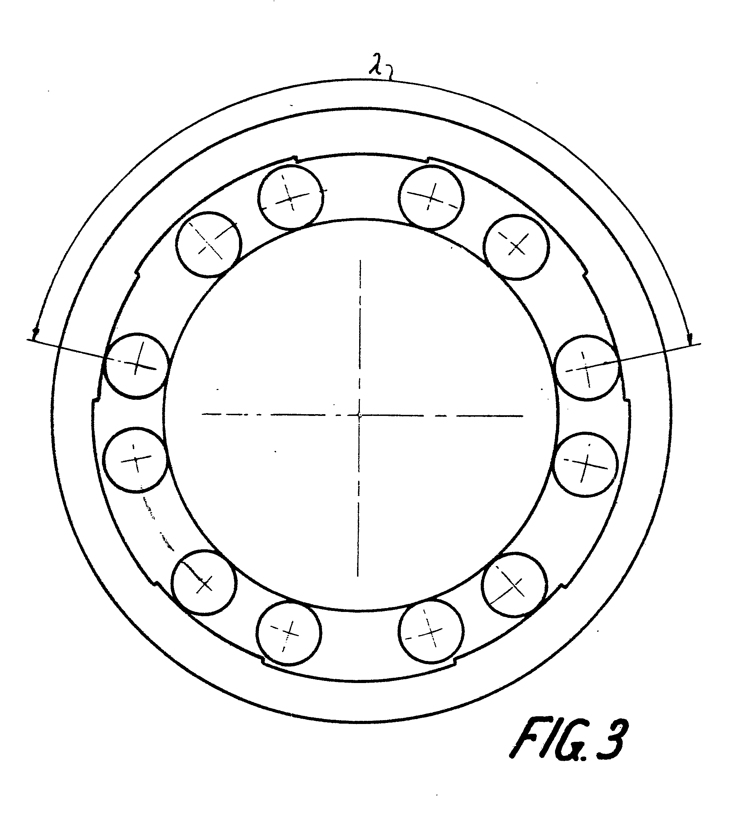

pour un modèle de six circuits de billes (voir fig. 3) contre

$$\frac{360°}{3} = 120°$$

pour l'élément selon l'invention (voir fig. 4) $\Rightarrow$ gain 36°

$$\frac{360°}{3,1} = 116°$$

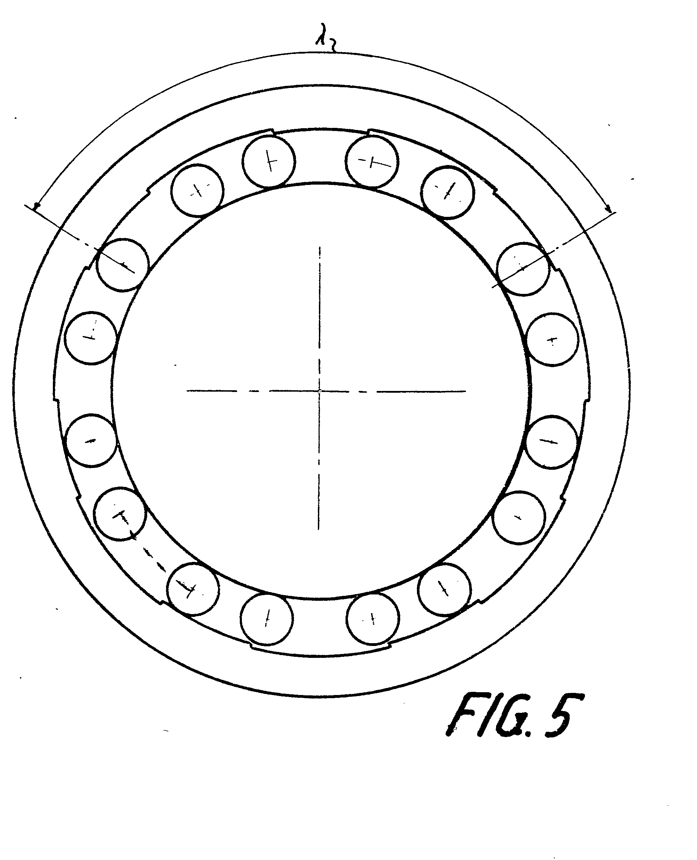

pour un modèle de 8 circuits de billes (voir fig. 5) contre

$$\frac{360°}{4} = 90°$$

pour l'élément selon l'invention (voir fig. 6) ⇒ gain 26°

$$\frac{360°}{3,91} = 92°$$

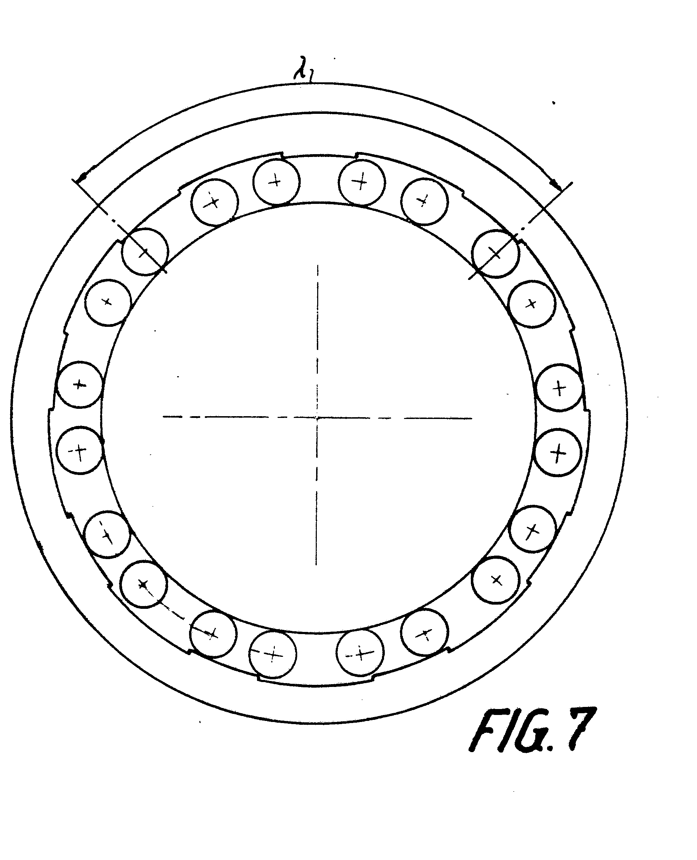

pour un modèle de 10 circuits de billes (voir fig. 7) contre

$$\frac{360°}{5} = 72°$$

pour l'élément selon l'invention (voir fig. 8) ⇒ gain 20°.

Inversément, on remarque les rapports intéressants apportés par l'invention au niveau du gain en nombre de circuits de circulation relativement à une valeur angulaire $\lambda$ sensiblement identique.

L'homme du métier remarque immédiatement que l'élément selon l'invention dans un exemple à 8 circuits de billes possède un angle $\lambda$ plus faible que l'angle $\lambda$ d'une exécution avec 10 circuits d'un modèle connu dans l'état actuel de la technique et qu'avec deux circuits de billes en moins, l'élément a une capacité de charge encore sensiblement supérierure à celle du modèle connu, et ceci sans tenir compte du fait qu'en choisissant la valeur de l'angle $\beta$ proche de la valeur de l'angle $\gamma$, il est possible de prévoir de plus grosses billes et d'augmenter encore la capacité de charge de l'élément.

L'élément qui vient d'être décrit fonctionne comme les éléments à alternance de contact connus dans l'état actuel de la technique, la circulation des billes dans les circuits servant au déplacement linéaire, la rotation étant obtenue par une alternance des rectilignes de billes des circuits sur les secteurs de travail du manchon. L'invention consiste donc en une diminution de la valeur de l'angle au centre $\lambda$ appelé aussi angle de décrochage, cet angle est directement lié à la capacité de charge de l'élément et définit cette dernière d'une façon absolue. De ce fait, il est maintenant possible selon l'invention de fabriquer un guidage axial-rotatif ayant une capacité de charge suffisante et un prix de revient intéressant, depuis des dimensions d'arbre de l'ordre de 6 millimètres jusqu'à plus de 50 millimètres. Le nombre de circuits est de 6 pour les éléments de 6 à 12 millimètres, de 8 pour les éléments de 12 à 25 millimètres et de 10 pour les plus grandes dimensions. Il est aussi possible et avantageux de prévoir une gamme d'éléments économiques avec 6 circuits pour toutes les dimensions, et dans ce cas, d'adopter un diamètre de billes identique aux versions de guidage uniquement linéaires, par exemple d'un rapport diamètre arbre-diamètre bille de 1/5 + 1/7.

Des butées à frictions qui maintiennent longitudinalement la cage 4 de l'élément selon l'invention ont dans une variante un fil d'acier à ressort 18 de forme sensiblement polygonale.

Dans une deuxième variante, les butées à friction sont formées d'une masse de matière plastique semi-déformable circulaire 19 qui se monte par élasticité dans les rainures 16 situées aux extrémités du manchon. Dans une troisième variante, une rondelle métallique 20 est interposée entre la cage 4 et les masses circulaires en matière plastique 19 et sert à la friction contre al cage. En variante, la rondelle métallique 20 est fixée aux masses circulaires 19 par des moyens 21 combinés ou non à une vulcanisation ou à une soudure.

Dans une variante d'exécution, la masse circulaire 19 comporte une lèvre souple 22 conférant à l'ensemble la caractéristique de joint d'étanchéité et peut être interchangeable avec la butée 19 sans lèvre.

Le montage de l'élément se fait facilement par »coulage« des billes par gravité dans la cage partiellement sortie du manchon, un trou 23 aménagé dans le manchon est fermé par la suite par un bouchon en plastique permet la charge des deux dernières billes des circuits. Dans une variante, on charge des dernières billes par flexion des parties de la cage sur un rectiligne de chaque circuit, la largeur de ce passage étant prévue sensiblement plus petite que le diamètre des billes, ces dernières étant introduites par flexion des languettes de la cage, cette solution est particulièrement intéressante dans la version avec cage en matière plastique.

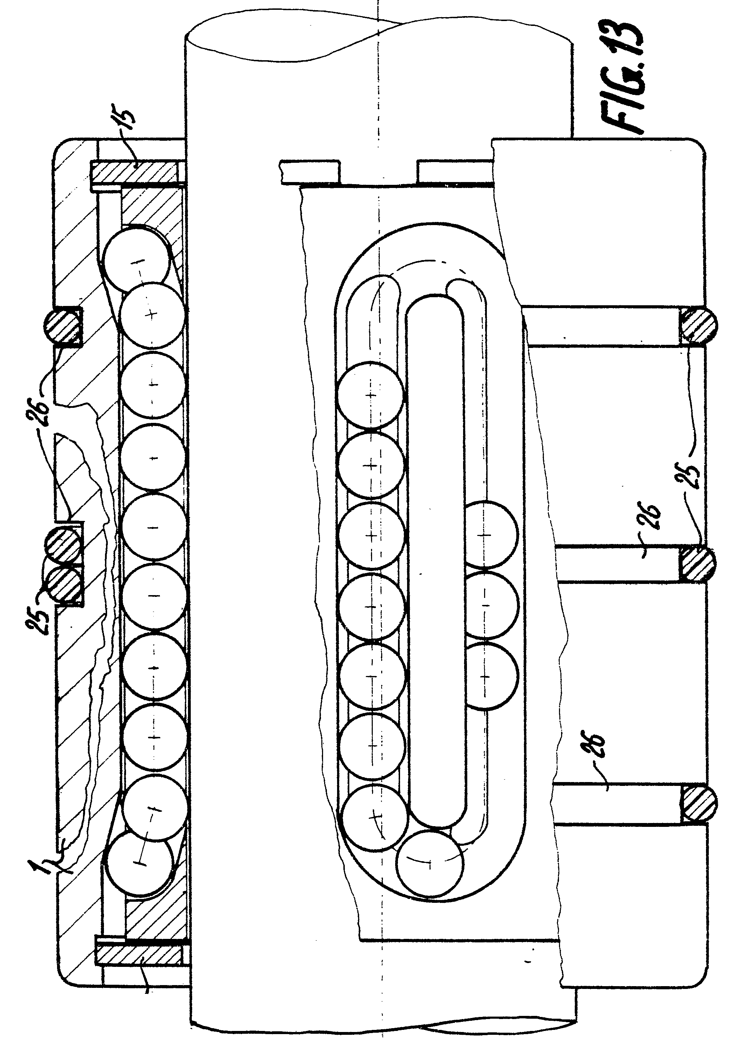

En variante d'exécution selon l'invention, le manchon 1 comporte une fente longitudinale 24 plus étroite que le diamètre des billes située sur un secteur de dégagement 6 de préférence au bord de ce dernier (fig. 12). Cette fente permet un réglage de l'ajustage de l'élément par exemple dans un support réglable.

Dans une autre variante d'exécution, l'élément selon l'invention comporte à l'extérieur du manchon des parties en matière compressible ou élastique servant à fixer l'élément dans son logement ou à positionnner l'élément à sa place avec une certaine élasticité et lui conférant un caractère auto-alignant, ce système déformable est dans une version préférée une ou plusieurs bagues circulaires 25 en élastomère ou nylon positionnées dans des rainures circulaires 26 à l'extérieur du manchon 1. Ces bagues peuvent aussi servir de retenue axiale de l'élément en combinaison avec une rainure dans le logement.

En variante, le manchon possède son diamètre extérieur d'ajustage sur une courte partie centrale, cette solution conférant à l'élément un caractère autoalignant.

En variante, le manchon est en forme de support, son extérieur comportant au moins une suface d'appui et des moyens de fixation. La dureté du manchon extérieur et des billes est d'environ 62 RC. La précision géométrique du manchon est importante, toutfois elle est obtenue facilement par un procédé de rodage sur les secteurs de travail. Ces secteurs sont obtenus avantageusement avant la trempe du manchon par brochage du profil général interne, les angles au centre $\gamma$ et $\delta$ étant importants, la surface latérale séparant les secteurs de travail et de dégagement est dirigée radialement sur le centre de l'élément pour que ces angles ne varient pas lors des opérations de finition. Les angles au centre $\alpha$ et $\beta$ étant aussi importants, les billes sont positionnées dans les chemins de la cage avec un jeu d'environ 1/30 de leur diamètre. La profondeur des secteurs de dégagement se situe entre 1/50 et 1/10 du diamètre des billes.

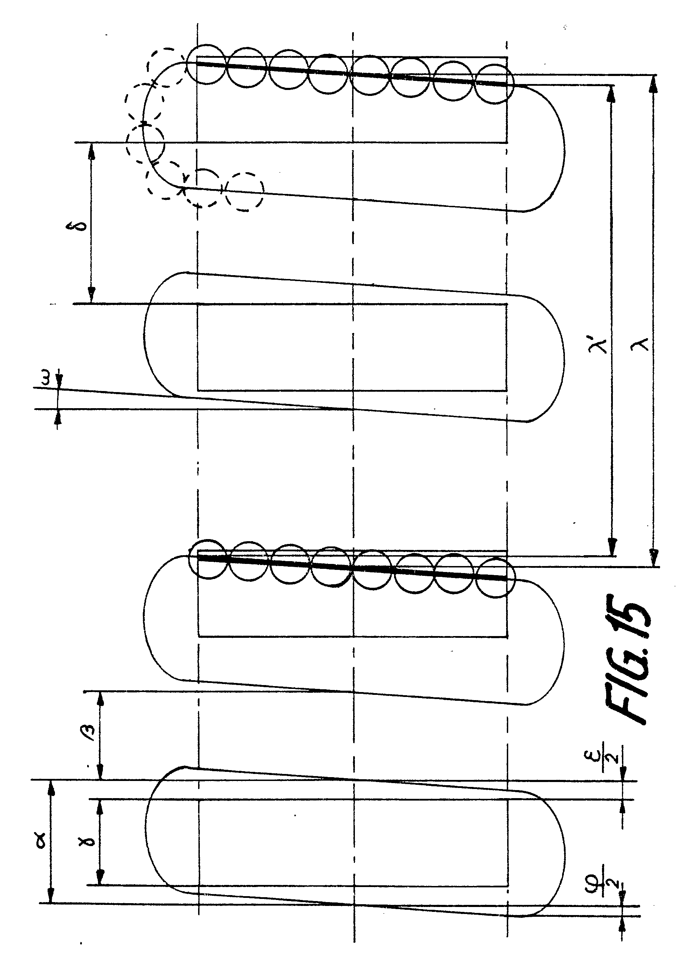

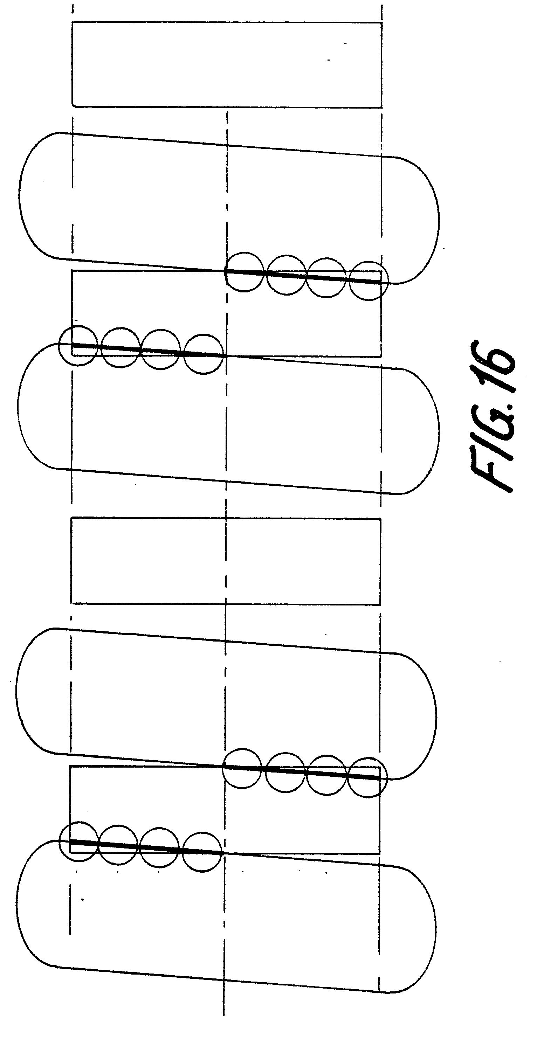

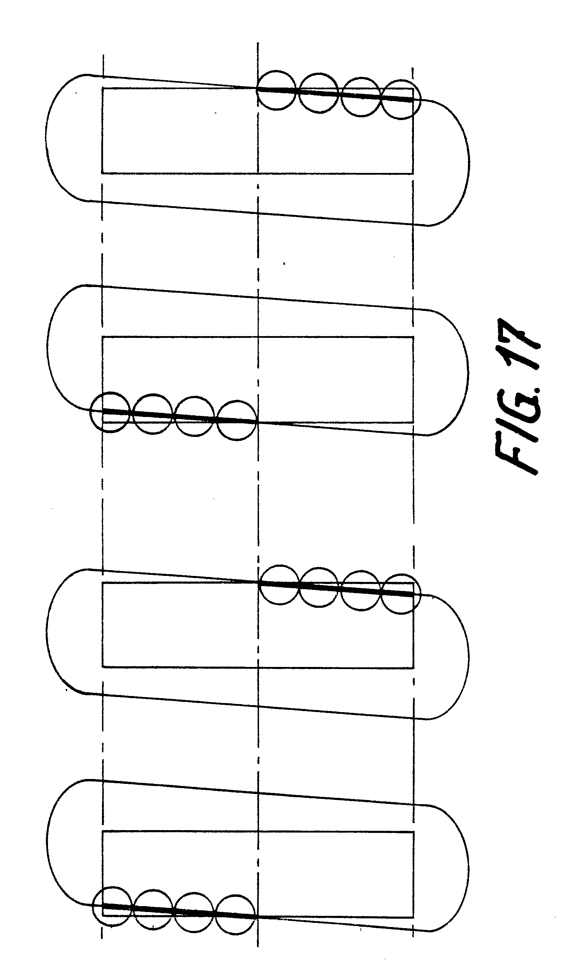

Le mode de guidage selon l'invention peut dans une variante intéressante avoir ses circuits dont les rectilignes de billes sont inclinés par rapport à l'axe ou la génératrice de la cage, cette caractéristique aboutit à ce que lors d'un fonctionnement uniquement linéaire, chaque bille possède son propre chemin de contact et dans le cas particulier où un angle $\omega$ est prévu entre les secteurs de travail d'une part et les rectilignes de billes d'autre part, les entrées des billes sur les secteurs lors d'une utilisation avec un mouvement rotatif s'effectue séparément, ce qui donne un fonctionnement sensiblement plus doux. Dans cette exécution, ou doit indroduire dans les calculs, l'angle au centre $\varphi$ défini par la perte angulaire due à l'inclinaison relative $\omega$ (fig. 15) $\varphi$ devant être plus petit que $\varepsilon$, $\beta$ pouvant être dans ce cas légèrement plus petit ou égal à $\gamma$ (fig. 15, 16 et 17).

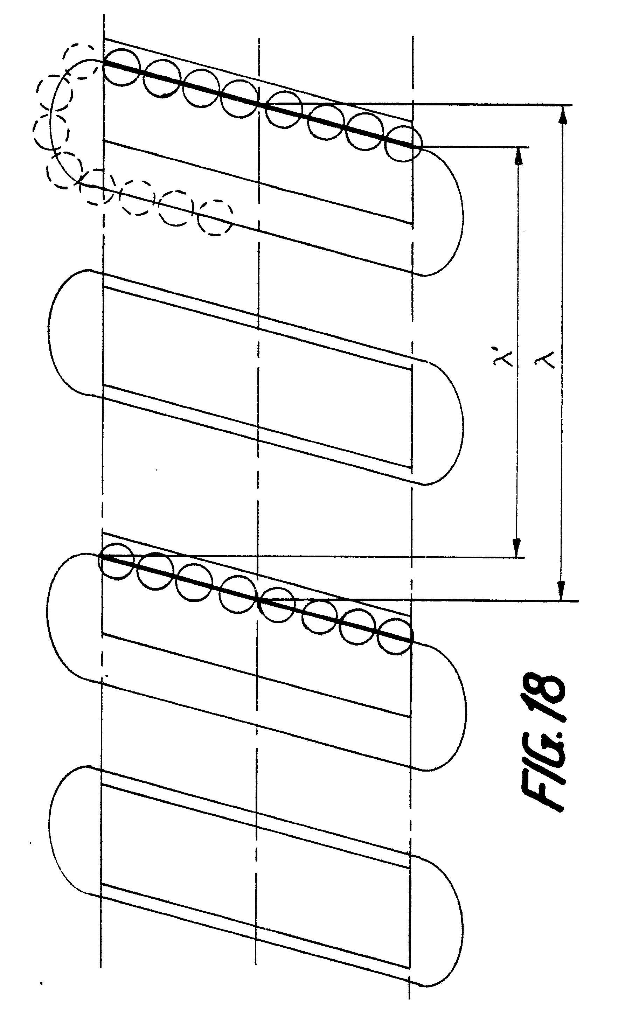

Dans une exécution de cette variante avec les circuits inclinés, les sectuers de travail 5 sont aussi inclinés dans le même sens d'hélice (fig. 18), cette inclinaison générale pouvant dans ce cas être beaucoup plus importante et atteindre une valeur de l'ordre de 20°. Cette solution apporte une diminution de l'effet de l'angle de décrochage $\lambda$ en créant un angle au centre $\lambda'$ plus petit que l'angle au centre $\lambda'$ possible avec les secteurs non inclinés (fig 15) et de ce fait augmente encore la capacité de charge de l'élément selon l'invention.

**Revendications**

1. Elément de guidage par contact à billes sur un arbre (7) pour mouvement linéaire illimité et/ou rotatif, comprenant un manchon extérieur (1), positionnant axialement une cage tubulaire (4) intérieure libre en rotation comportant des circuits fermés (3) de circulation de billes (2) formés de deux rectilignes longitudinaux (8) crevant la cage et reliés entre eux à leur extrémité par des parties courbes (9), le manchon (1) présentant dans son alésage des secteurs de travail (5) assurant le contact des billes avec l'arbre et des secteurs de dégagement (6) permettant en alternance la circulation de retour de ces billes, la valeur angulaire des secteurs de travail (5) étant plus petite que l'angle au centre défini par deux rectilignes (8) d'un même circuit de billes et la valeur angulaire d'un secteur de dégagement (6) étant plus grande que l'angle au centre défini par les deux rectilignes (8) du circuit (3), caractérisé en ce que la cage à billes (4) est pourvue d'un nombre P de paires de circuits fermés (3) de circulation de billes, le nombre de circuits étant de six, huit ou dix, les circuits (3) étant groupés par paires, l'angle au centre $\beta$ séparant les deux rectilignes adjacents (8) des deux circuits de la même paire étant égal ou plus petit que l'angle au centre $\gamma$ d'un secteur de travail du manchon, les paires de circuits étant réparties selon une division angulaire régulière sur le portour de la cage (4), le nombre de circuits (3) de circulation de billes étant égal au nombre de secteurs de travail ou de dégagement du manchon présentant également une répartition angulaire régulière et l'angle au centre $\alpha$ défini par les deux rectilignes d'un même circuit étant sensiblement égal à $\dfrac{360°}{4\,P}$, de

telle façon qu'il n'y a dans la position d'alternance la plus défavorable que trois rectilignes successifs de billes non chargés entre les deux rectilignes chargés les plus proches définissant un angle au centre de décrochage $\lambda$ (fig. 6 et 8), cet angle $\lambda$ étant de

$$2 \left( \frac{360°}{\text{nombre de circuits de billes}} \right)$$

2. Elément selon la revendication 1, caractérisé en ce que l'angle au centre $\gamma$ défini par un secteur de travail (5) est de

$$\frac{360°}{4\,P} - \varepsilon,$$

$\varepsilon$ étant un jeu angulaire défini par

$$\frac{360°}{4\,P\,(H+1)} \leq \varepsilon \leq \frac{360°}{(H+1)^2}$$

3. Elément selon les revendications 1 et 2, caractérisé en ce que l'angle au centre $\beta$ défini par les deux rectilignes (8) adjacents proches dans une paire de circuits a la valeur de

$$\frac{360}{4\,P} - 2\,\varepsilon \leq \beta \leq \frac{360}{4\,P} - \varepsilon.$$

4. Elément selon la revendication 1, caractérisé en ce que les rectilignes (8) des circuits de billes forment un angle avec l'axe de l'élément, l'angle au centre $\lambda'$ étant plus petit que

$$2 \left( \frac{360°}{\text{nombre de circuits de billes}} \right).$$

5. Elément selon la revendication 1, caractérisé en ce que les secteurs de travail et les rectilignes des circuits de billes forment un angle avec l'axe de l'élément, l'angle au centre $\lambda'$ étant plus petit d'au moins 10% que

$$2 \left( \frac{360°}{\text{nombre de circuits de billes}} \right),$$

(fig. 1b).

6. Elément selon la revendication 1, caractérisé en ce que le nombre P de paires de circuits (3) est de trois pour les éléments fonctionnant sur un arbre d'un diamètre plus petit que 12 millimètres, de quatre pour les éléments d'un diamètre d'arbre compris entre 12 millimètres et 25 millimètres et de cinq pour les éléments d'un diamètre d'arbre plus grand que 25 millimètres.

7. Elément selon la revendication 1, caractérisé en que le nombre P de paires de circuits (3) est de trois, le rapport du diamètre des billes et du diamètre des l'arbre se situe entre 1/5 et 1/7.

8. Elément selon la revendication 1, caractérisé en ce que la cage à billes (4) est positionnée axialement relativement au manchon (1) par des butées à friction constituées par un fil d'acier à ressort de forme polygonale (18) (fig. 14).

9. Elément selon la revendication 1, caracterisé en ce que la cage à billes est positionnée axialement relativement au manchon par des bagues de matière plastique semi-déformable (19) en prise dans une rainure circulaire située aux extrémités du manchon (fig. 10, 11).

10. Elément selon les revendications 1 et 9, caractérisé en ce qu'une rondelle métallique (20) est située entre la cage à billes et les bagues de retenue circulaire en matière semi-déformable.

11. Elément selon les revendications 1 et 10, caractérisé en ce que des moyens (21) fixent les rondelles métalliques relativement aux bagues de retenue circulaire en matière semi-déformable.

12. Elément selon la revendication 1 et l'une quelconque des revendications 9, 10 et 11, caractérisé en ce que la bague circulaire en matière semi-déformable comporte une lèvre souple circulaire (22) en contact avec l'arbre et faisant office de joint d'étanchéité.

13. Elément selon la revendication 1, caractérisé en ce que le manchon comporte une fente longitudinale (24) plus étroite que le diamètre d'une bille crevant le manchon dans un secteur de dégagement, la fente étant située au bord du secteur de travail adjacent au secteur de dégagement portant la fente (fig. 12).

## Patentansprüche

1. Kugelführungsvorrichtung für unbegrenzte Längs- und/oder Drehbewegungen durch Kugelberührung auf einer Welle (7), mit einer äußeren Hülse (1), welche axial einen rohrförmigen inneren Kugelkäfig (4) positioniert, welcher frei drehbeweglich ist und in sich geschlossene Umlaufwege (3) für Kugeln (2) mit zwei längsgerichteten, die Wandung des Käfigs durchsetzenden geraden Stücken (8) aufweist, die miteinander an ihren Enden durch Endschleifen (9) verbunden sind, wobei die Hülse (1) in ihrer Bohrung Arbeitsbereiche (5) besitzt, welche die Kugelberührung mit der Welle bewirken, sowie Rücklaufbereiche (6), die abwechselnd die Rückführung dieser Kugeln erlauben, und wobei die Arbeitsbereiche (5) winkelmäßig kürzer sind als der Zentrumswinkel, der durch zwei gerade Stücke (8) desselben Kugelumlaufweges definiert ist, und der Rücklaufbereich (6) winkelmäßig größer ist als der Zentrumswinkel, der durch zwei gerade Stücke (8) des Umlaufweges (3) definiert ist, dadurch gekennzeichnet, daß der Kugelkäfig (4) eine Anzahl P von geschlossenen Kugelumlaufweg-Paaren aufweist und die Anzahl der Kugelumlaufwege sechs, acht oder zehn beträgt, daß die Umlaufwege (3) paarweise gruppiert sind, wobei der Zentrumswinkel $\beta$, der zwei benachbarte gerade Stücke (8) der beiden Umlaufwege des gleichen Paares trennt gleich oder kleiner als der Zentrumswinkel $\gamma$ eines Arbeitsbereiches in der Hülse ist, daß die Paare der Umlaufwege in regelmäßiger Winkelteilung auf dem Umfang des Käfigs (4) angeordnet sind, daß die Anzahl der Kugelumlaufwege (3) gleich der Anzahl der Arbeitsbereiche oder Rücklaufbereiche ist, welche ebenfalls in regelmäßiger Winkelteilung angeordnet sind, und daß der Zentrumswinkel $\alpha$, der durch die beiden geraden Stücke des gleichen Umlaufweges definiert ist, praktisch gleich dem Wert $\frac{360°}{4P}$ ist, derart, daß in der ungünstigsten Alternierungsstellung nur drei aufeinander folgende kugelfreie gerade Stücke zwischen den zwei nächstliegenden kugelhaltigen geraden Stücken vorhanden sind, welche einen Mittelpunkts-Störungswinkel $\lambda$ (Fig. 6 und 8) definieren, dessen Wert

$$2 \left( \frac{360°}{\text{Anzahl der Kugelumlaufwege}} \right)$$

beträgt.

2. Kugelführungsvorrichtung gemäß Anspruch 1, dadurch gekennzeichnet, daß der Zentrumswinkel $\gamma$, definiert durch einen Arbeitsbereich (5),

$$\frac{360°}{4P} - \varepsilon$$

ist, wobei $\varepsilon$ ein Winkelspiel ist, das durch die Beziehung

$$\frac{360°}{4P(H+1)} \leq \varepsilon \leq \frac{360°}{(H+1)^2}$$

definiert ist.

3. Kugelführungsvorrichtung nach den Ansprüchen 1 und 2, dadurch gekennzeichnet, daß der Zentrumswinkel $\beta$, der durch die beiden nächstliegenden geraden Stücke (8) eines Paares von Kugelumlaufwegen definiert ist, einen Wert gemäß folgender Beziehung aufweist:

$$\frac{360}{4\,P} - 2\,\varepsilon \le \beta \le \frac{360}{4\,P} - \varepsilon.$$

4. Kugelführungsvorrichtung nach Anspruch 1, dadurch gekennzeichnet, daß die beiden geraden Stücke (8) der Kugelumlaufwege mit der Achse der Vorrichtung einen Winkel bilden, wobei der Zentrumswinkel $\lambda'$ kleiner ist als

$$2\left(\frac{360°}{\text{Anzahl der Kugelumlaufwege}}\right)$$

5. Kugelführungsvorrichtung nach Anspruch 1, dadurch gekennzeichnet, daß die Arbeitsbereiche und die geraden Stücke der Kugelumlaufwege mit der Achse der Vorrichtung einen Winkel bilden, wobei der Zentrumswinkel $\lambda'$ um mindestens 10% kleiner ist als der Wert von

$$2\left(\frac{360°}{\text{Anzahl der Kugelumlaufwege}}\right)$$

(Fig. 18).

6. Kugelführungsvorrichtung nach Anspruch 1, dadurch gekennzeichnet, daß die Anzahl P der Paare von Kugelumlaufwegen (3) den Wert 3 besitzt für Vorrichtungen, die auf einer Welle mit einem Durchmesser kleiner als 12 mm arbeiten, den Wert 4 für Vorrichtungen mit einem Wellendurchmesser zwischen 12 und 25 mm und einen Wert von 5 für Vorrichtungen auf einer Welle mit einem Durchmesser von mehr als 25 mm.

7. Kugelführungsvorrichtung nach Anspruch 1, dadurch gekennzeichnet, daß die Anzahl P der Paare von Umlaufwegen (3) drei beträgt und das Verhältnis vom Kugeldurchmesser zum Wellendurchmesser im Bereich von 1/5 bis 1/7 liegt.

8. Kugelführungsvorrichtung nach Anspruch 1, dadurch gekennzeichnet, daß der Kugelkäfig (4) gegenüber der Hülse (1) durch Reibungsanschläge axial festgelegt ist, welche aus einem mehreckigen Draht aus Federstahl (18) bestehen (Fig. 14).

9. Kugelführungsvorrichtung nach Anspruch 1, dadurch gekennzeichnet, daß der Kugelkäfig gegenüber der Hülse durch Ringe (19) aus halbdeformierbarem Kunststoff axial festgelegt ist, welche in eine Ringnut eingreifen, die sich an den Endbereichen der Hülse befindet (Fig. 10, 11).

10. Kugelführungsvorrichtung nach den Ansprüchen 1 und 9, dadurch gekennzeichnet, daß ein Metallring (20) zwischen dem Kugelkäfig und den kreisförmigen Sprengringen aus halbdeformierbarem Kunststoff angeordnet ist.

11. Kugelführungsvorrichtung nach den Ansprüchen 1 und 10, dadurch gekennzeichnet, daß die Metallringe gegenüber den kreisförmigen Sprengringen aus halbdeformierbarem Material durch Haltemittel (21) befestigt sind.

12. Kugelführungsvorrichtung nach Anspruch 1 und einem der Ansprüche 9, 10 und 11, dadurch gekennzeichnet, daß der kreisförmige Sprengring aus halbdeformierbarem Material eine biegsame ringförmige Lippe (22) besitzt, die an der Welle anliegt und als Dichtung wirkt.

13. Kugelführungsvorrichtung nach Anspruch 1, dadurch gekennzeichnet, daß die Hülse einen Längsschlitz (24) aufweist, der schmaler ist als der Durchmesser einer Kugel und die Hülse in einem Rücklaufbereich durchsetzt, wobei der Schlitz am Rande des Arbeitsbereiches liegt, der zum Rücklaufbereich, der den Schlitz aufweist, benachbart ist (Fig. 12).

## Claims

1. A guide device involving ball-bearing contact on a shaft (7) for unlimited linear and/or rotary motion which comprises an external sleeve (1) that axially aligns a freely rotatable internal tubular cage (4) having closed circulation circuits (3) for balls (2), said circuits being formed by two longitudinal rectilinear portions (8) intersecting the wall of the cage and joined to each other by curved portions (9) at their ends, the sleeve (1) having in its bore working portions (5) ensuring the contact of the balls and the shaft, and disengagement portions (6) permitting an alternating recycling of these balls, the angular value of the working portions (5) being smaller than the angle at center defined by two rectilinear portions (8) of the same ball circulation circuit, and the angular value of a disengagement portion (6) being greater than the angle at center defined by the two rectilinear portions (8) of the circuit (3), said guide device being characterised in that the ball cage (4) is provided with a number P of pairs of closed ball circulation circuits (3), the number of circuits being six, eight or ten and the circuits (3) being grouped by pairs, the angle at center $\beta$ which separates the two adjacent rectilinear portions to two circuits belonging to the same pair being equal to or smaller than the angle at center $\gamma$ defined by a working portion in said sleeve, the circuit pairs being distributed in a regular angular manner on the periphery of the cage (4), the number of ball circulation circuits (3) equalling the number of the working disengagement portions of the sleeve which are also distributed in a regular angular manner, the angle at center $\alpha$ defined by the two rectilinear sections of the same circuit being substantially

equal to $\dfrac{360°}{4\,P}$ in such a manner that, in the most disadvantageous alternating position, there are only three successive ballfree rectilinear portions between the two nearest ball-containing rectilinear portions defining an out-of-phase angle at center $\lambda$ (Fig. 6 and 8), said angle having the value

$$2 \cdot \left( \frac{360°}{\text{number of ball circulation circuits}} \right)$$

2. Guide device according to claim 1, characterised in that the angle at center $\gamma$ defined by a working portion (5) is

$$\frac{360°}{4P} - \varepsilon,$$

$\varepsilon$ being an angular clearance defined by

$$\frac{360°}{4P\,(H+1)} \leq \varepsilon \leq \frac{360°}{(H+1)^2}.$$

3. Guide device according to claims 1 and 2, characterised in that the angle at center $\beta$ defined by the two adjacent rectilinear portions (8) in a circuit pair has the value

$$\frac{360°}{4P} - 2\,\varepsilon \leq \beta \leq \frac{360°}{4P} - \varepsilon.$$

4. Guide device according to claim 1, characterised in that the rectilinear portions (8) of the ball circulation circuits form an angle with the device axis, the angle at center $\lambda'$ being smaller than

$$2 \cdot \left( \frac{360°}{\text{number of ball circulation circuits}} \right).$$

5. Guide device according to claim 1, characterised in that the working portions and the rectilinear portions of the ball circulation circuits form an angle with the device axis, the angle at center $\lambda'$ being at least by 10% smaller than

$$2 \cdot \left( \frac{360°}{\text{number of ball circulation circuits}} \right).$$

6. Guide device according to claim 1, characterised in that the number P of pairs of circuits (3) is three for devices operating on a shaft of a diameter smaller than 12 millimeters, is four for devices where the shaft diameter is situated between 12 and 25 millimeters, and is five for devices where the shaft diameter is greater than 25 millimeters.

7. Guide device according to claim 1, characterised in that the number P of pairs of circuits (3) is three and the ratio of ball diameter and shaft diameter is between 1/5 and 1/7.

8. Guide device according to claim 1, characterised in that the ball cage (4) is axially positioned relative to the sleeve (1) by friction stop means comprising a polygonal-shaped spring steel wire (18) (Fig. 14).

9. Guide device according to claim 1, characterised in that the ball cage is positioned axially relative to the sleeve by semi-deformable plastics collars (19) mounted in a circular groove at the ends of the sleeve (Fig. 10, 11).

10. Guide device according to claims 1 and 9, characterised in that a metal ring (20) is mounted between the ball cage and the circular retention collars of semi-deformable plastics.

11. Guide device according to claims 1 and 10, characterised in that means (21) are provided which fix the metallic rings relative to the circular retention collars.

12. Guide device according to claim 1 and any one of claims 9, 10 and 11, characterised in that the circular collar of semi-deformable plastics material comprises a flexible circular lip (22) in contact wiht the shaft, serving as a sealing joint.

13. Guide device according to claim 1, characterised in that the sleeve comprises a longitudinal slot (24) narrower than the diameter of a ball and intersecting the sleeve within a disengagement portion, said slot being situated at the edge of the working portion which is adjacent to the disengagement portion carrying said slot (Fig. 12).

FIG. 1

FIG.2

*FIG. 3*

FIG. 4

FIG. 5

FIG. 6

FIG. 7

FIG. 8

FIG.9

FIG. 11

FIG. 10

0 015 243

FIG.12

FIG. 13

FIG.14

FIG. 15

*FIG.16*

FIG. 17

0 015 243

FIG. 18